# EUROPEAN PATENT SPECIFICATION

(11) **EP 0 594 405 B1**
(45) Date of publication and mention of the grant of the patent: **20.08.1997**
(21) Application number: 93308316.4
(22) Date of filing: 19.10.1993
(51) Int. Cl.: B60P 1/48

(54) **An apparatus for transferring a load**
Ein Gerät zum Umsetzen einer Last
Un dispositif pour déplacer une charge

(30) Priority: 21.10.1992 FI 924772
(43) Date of publication of application: 27.04.1994
(73) Proprietor: MULTILIFT OY, SF-21201 Raisio (FI)
(72) Inventor: Mylläri, Esa, SF-21200 Raisio (FI)
(74) Representative: Price, Paul Anthony King

(56) References cited:
- DE-A- 3 040 637
- DE-U- 7 900 608
- US-A- 3 825 137

## Description

The present invention relates to apparatus for transferring a load onto a vehicle and off the vehicle, which apparatus comprises an L-shaped arm comprising a vertical arm and a horizontal arm, wherein at the upper end of the vertical arm there is located a gripping hook and at the rear end of the horizontal arm or an extension thereof there is located a transverse turning shaft, around which the L-shaped arm may be turned by an actuator; wherein, during the transfer movement of the load, the gripping hook may be turned around a transverse shaft relative to the vertical arm of the L-shaped arm and relative to a projection on the vertical arm or on an extension of the vertical arm so that the projection at a certain position of the gripping hook is at least partially in front of the open gap of the gripping hook and at another position leaves the open gap of the gripping hook at least mainly open.

In the closest prior art document EP-A-0377491 a loading device has been described, on the vertical arm of whose L-shaped arm there is a projection, and the gripping hook may be turned relative to the vertical arm and the projection. In the transporting position, the projection closes the gap of the hook, and when the hook is turned upside down, the projection leaves the gap open. The projection thus functions as an automatic safety lock.

However, on platforms according to platform standards used in different countries, the gripping arch on the front wall of the platform, from which arch the gripping hook grips the platform, is located at different heights. The aforementioned previously known hooking device is not applicable to handling two such platforms, the gripping arches of which are at different heights. If the device is used for handling such a platform, whose gripping arch is located higher than the height for which the device is actually intended, the hook is suspended during the handling at some stages too low relative to the height of the platform to be handled.

In this case, the lower edge of the platform collides with the intermediate frame of the the device. Similarly, the platform cannot remain in a correct tipped position during the tipping, if the the gripping arch of the platform is located on the platform too high relative to the hook position.

The object of the present invention is to eliminate this drawback. The apparatus of the invention is characterized in that the vertical arm of the L-shaped arm or the extension of the vertical arm is provided with restricting means which (i) may be placed in position so that it limits the turning of the gripping hook round to its position closest to the lower end of the vertical arm, allowing only the initial part of the turning movement, and (ii) may be removed so that it allows the turning of the gripping hook round to said position closest to the lower end of the vertical arm.

The solution of the invention is very simple and easy to be realized. By means thereof, the same load handling apparatus may be used on platforms according to the standards of two different countries, although the platforms have a gripping arch at different heights.

A non-limiting embodiment of the invention will now be described with reference to the accompanying drawings, wherein:
Fig. 1 shows an apparatus of the invention in different positions;
Fig. 2 shows an extension of a vertical arm and a gripping hook when separated from each other;
Fig. 3 shows a detail of the apparatus of the invention together with a demountable platform having a low gripping arch; and
Fig. 4 shows the same apparatus in connection with a demountable platform having a high gripping arch.

The loading apparatus has a rear frame 2 turning around the rearmost transverse articulated shaft 1, a middle frame 4 turnably fixed around a transverse shaft 3 to the front end of the rear frame, as well as an L-shaped arm 6 turnably fixed around a transverse articulated shaft 5 to the front end of the middle frame. In this case, the articulated shaft 5 is fitted to the rear end of a horizontal arm 7 of the arm 6. Moving the parts around the pivots 1, 3 and 5 occurs by actuators or hydraulic cylinder piston devices 8 and 9. A gripping hook 18 is located on the upper end of the vertical arm of the L-shaped arm 6.

The loading of a demountable platform 13 on the ground 12 onto the vehicle requires that the middle frame 4 with its arm 6 is turned around the shaft 3 backwards and the gripping hook 18 is fitted into a gripping link or arch 14 on the upper part of the front end of the platform 13. Thereafter, the middle frame with its arm 6 is turned back to the front. The curved portion of the movement path of the gripping hook is designated with a dash-and-dot line 15. At the front end of the movement path there is located a horizontal portion, which is achieved by turning the arm 6 around the shaft 5. Lowering the platform from a vehicle to the ground occurs in a reversed order.

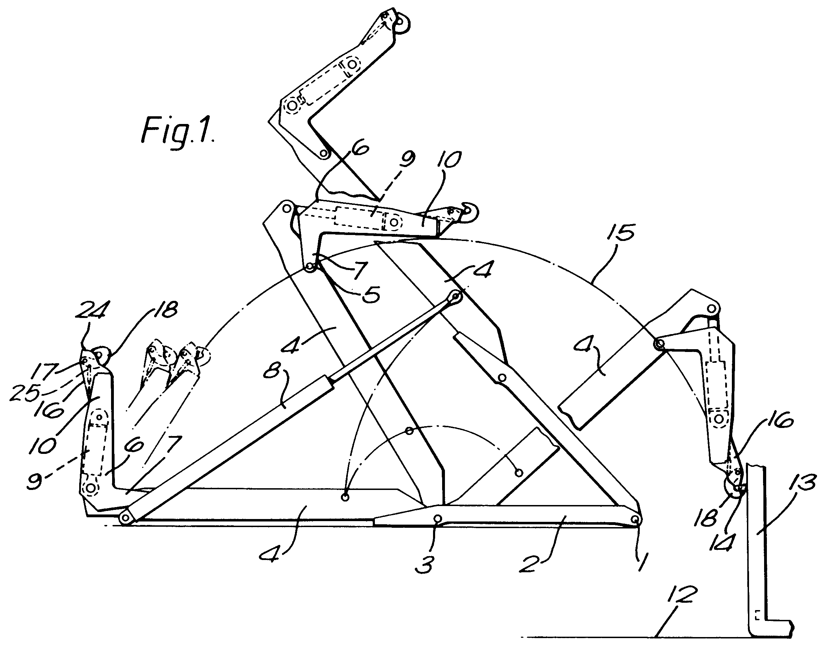

Fig. 1 also shows, by means of the uppermost position of the arm 6, a tipping position, wherein the rear and middle frames 2 and 4 of the loading device are locked rigidly to each other.

The gripping hook 18 is turnably fixed around a transverse pivot 17 to an extension 16 of the vertical arm 10. As shown in Fig. 1, the hook 18 may turn, as the arm 6 turns, backwards about the pivot 17 relative to the extension 16 and downwards by the action of its own weight and/or the weight of a demountable platform suspended on the hook. The extension 16 is fixed rigidly e.g. by means of two bolts to the vertical arm of the arm 6, or it may also be integral with the vertical arm.

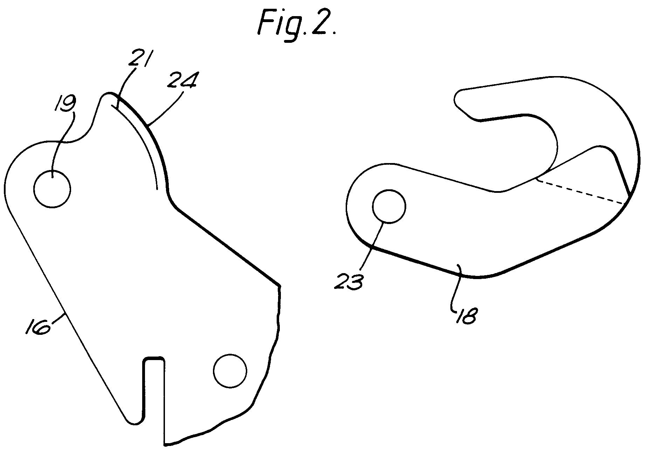

A more detailed structure and design of the extension 16 and the hook 18 are apparent from Fig. 2. There is a hole 19 in the front part of the upper end of the extension 16 for a pivot pin. There is a projection 24 on the extension behind the articulated point 19. Correspondingly, there is a hole 23 at the upper end of the front part of the hook 18, through which the pivot pin to be fixed in the hole 19 of the extension is fitted. When the hook 18 is turned around its pivot back and downwards, the projection 24 of the extension 16 is positioned at an open gap of the hook and closes the gap. The gripping arch of the platform then remains in position in the gap. This safety lock area has been indicated in Fig. 2 by a curve 21.

In the final step of the lowering, the arm 6 and the extension 16 are turned upside down (in Fig. 1 shown in the most extreme position to the right). The extension 16 has then turned relative to the freely downwardly suspended hook 18 so that the projection 24 leaves the gap of the hook open and the hook may be detached from the arch 14 of the platform.

A spring 25, which pushes the hook towards the open position, when the load weight does not affect the hook, is fixed between the hook 18 and the extension 16. This facilitates the fixing to the platform and the removal therefrom. The force of the spring is sufficient to push an unloaded hook into an extreme position, but it has not enough strength to move a loaded hook. The extension 16 comprises two side plates, between which both the hook 18 and the spring 25 are located. Two projections 24 are located on the side plates of the extension 16.

The above-described features of the embodiment are known from EP-A-0377491.

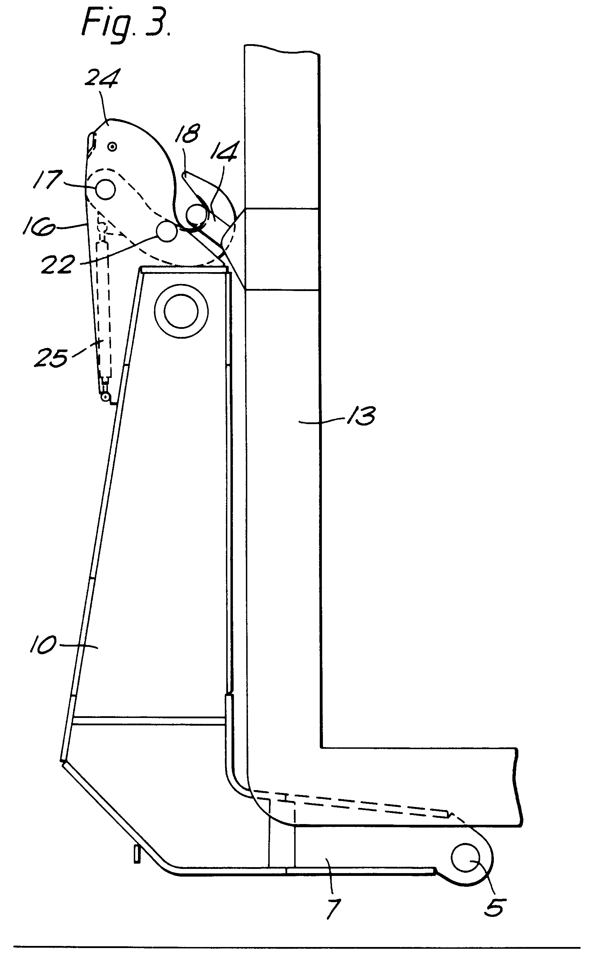

In order to use the device in connection with a platform whose gripping arch 14 is located higher than shown in Fig. 3, there is a hole 22 in the extension 16, into which hole a support shaft may be inserted, when so desired.

Fig. 3 shows the device without a support shaft, whereby the hook is capable of turning freely backwards. The device is then used for platforms whose gripping arch is located at a lower position.

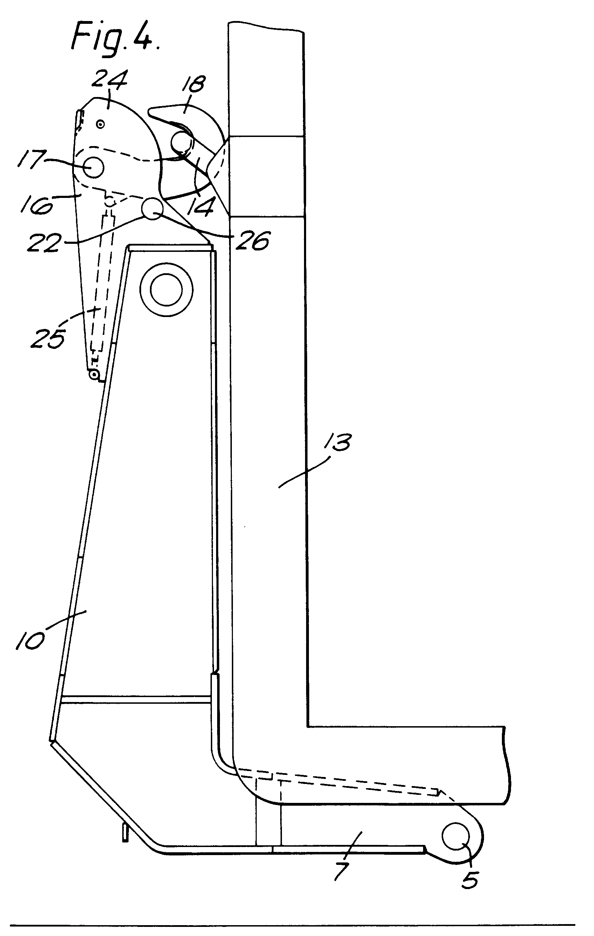

In Fig. 4, the support shaft 26 is inserted into the hole 22. The support shaft may be locked into the hole in any known manner. This support shaft supports the hook 18 and prevents it from turning into its lowermost position. In this way, the device may be used for platforms whose gripping arch is located at a higher position.

In Fig. 1, the horizontal transfer of the load is achieved by turning the arm 6 around the shaft 5. A corresponding transfer movement may also be realized by transferring the arm 6 telescopically relative to the middle frame 4.

Both above and in the following claims, the words "front end/rear end", "upper end/lower end" as well as "vertical portion/horizontal portion" have been used. These refer to the position of said parts in the transporting position of the loading device, i.e. the position of the arm 6 shown in the extreme position on the left in Fig. 1.

## Claims

1. Apparatus for transferring a load (13) onto a vehicle and off the vehicle, which apparatus comprises:-
an L-shaped arm (6) comprising a vertical arm (10) and a horizontal arm (7), wherein at the upper end of the vertical arm (10) there is located a gripping hook (18) and at the rear end of the horizontal arm (7) or an extension (4) thereof there is located a transverse turning shaft (3), around which the L-shaped arm may be turned by an actuator (8);
wherein, during the transfer movement of the load (13), the gripping hook (18) may be turned around a transverse shaft (17) relative to the vertical arm (10) of the L-shaped arm (6) and relative to a projection (24) on the vertical arm or on an extension (16) of the vertical arm (10) so that the projection at a certain position of the gripping hook (18) is at least partially in front of the open gap of the gripping hook (18) and at another position leaves the open gap of the gripping hook at least mainly open;
characterized in that the vertical arm (10) of the L-shaped arm (6) or the extension (16) of the vertical arm is provided with restricting means (26) which (i) may be placed in position so that it limits the turning of the gripping hook (18) round to its position closest to the lower end of the vertical arm, allowing only the initial part of the turning movement, and (ii) may be removed so that it allows the turning of the gripping hook (18) round to said position closest to the lower end of the vertical arm.

2. Apparatus according to Claim 1, wherein the restricting means (26) is a transverse horizontal rod.

3. Apparatus according to Claim 2, wherein the rod (26) may be detached from the vertical arm (10) or from the extension (16) of the vertical arm.

4. Apparatus according to claim 3, wherein the vertical arm (10) or the extension (16) of the vertical arm is provided with a hole (22), into which the rod (26) may be inserted.

## Patentansprüche

1. Vorrichtung zum Umsetzen einer Last (13) auf ein Fahrzeug und von dem Fahrzeug, wobei die Vorrichtung umfaßt:
einen L-förmigen Arm (6) mit einem vertikalen Arm (10) und einem horizontalen Arm (7), wobei an dem oberen Ende des vertikalen Armes (10) ein Greifhaken (18) angeordnet ist und an dem hinteren Ende des horizontalen Armes (7) oder einer Verlängerung (4) davon eine querverlaufende Schwenkachse (3) angeordnet ist, um welche der L-förmige Arm durch einen Aktuator (8) schwenkbar ist;
wobei während der Umsetzbewegung der Last (13) der Greifhaken (18) um die querverlaufende Achse (17) relativ zu dem vertikalen Arm (10) des L-förmigen Armes (6) und relativ zu einem Vorsprung (24) an dem vertikalen Arm oder an einer Verlängerung (16) des vertikalen Arms (10) schwenkbar ist, so daß der Vorsprung sich in einer bestimmten Position des Greifhakens (18) wenigstens teilweise vor dem offenen Spalt des Greifhakens (18) befindet und in einer anderen Position den offenen Spalt des Greifhakens wenigstens im wesentlichen offenläßt;
dadurch gekennzeichnet, daß der vertikale Arm (10) des L-förmigen Armes (6) oder die Verlängerung (16) des vertikalen Armes mit einer Begrenzungseinrichtung (26) versehen ist, welche (i) in einer Position plaziert werden kann, so daß sie die Schwenkung des Greifhakens (18) herum in seine Position nahe dem unteren Ende des vertikalen Armes begrenzt und nur den Anfangsteil der Schwenkbewegung zuläßt und (ii) entfernbar ist, so daß sie das Schwenken des Greifhakens (18) herum in die Position nahe dem unteren Ende des vertikalen Armes zuläßt.

2. Vorrichtung nach Anspruch 1,
bei welcher die Begrenzungseinrichtung (26) ein querverlaufender, horizontaler Stab ist.

3. Vorrichtung nach Anspruch 2,
bei welcher der Stab (26) von dem vertikalen Arm (10) oder von der Verlängerung (16) des vertikalen Arms entfernt werden kann.

4. Vorrichtung nach Anspruch 3,
bei welcher der vertikale Arm (10) oder die Verlängerung (16) des vertikalen Armes mit einem Loch (22) versehen ist, in welches der Stab (26) einsetzbar ist.

## Revendications

1. Appareil pour transférer une charge (13) sur un véhicule et hors du véhicule, lequel appareil comprend :
un bras (6) en forme de L comprenant un bras vertical (10) et un bras horizontal (7), où à l'extrémité supérieure du bras vertical (10) est placé un crochet de serrage (18) et à l'extrémité arrière du bras horizontal (7) ou à une extension (4) de celui-ci est placé un arbre tournant transversal (3), autour duquel le bras en forme de L peut être tourné par un moyen d'actionnement (8) ;
où, pendant le mouvement de transfert de la charge (13), le crochet de serrage (18) peut être tourné autour d'un arbre transversal (17) relativement au bras vertical (10) du bras (6) en forme de L et relativement à une protubérance (24) sur le bras vertical ou sur une extension (16) du bras vertical (10) de manière que la protubérance, en une certaine position du crochet de serrage (18), soit au moins partiellement devant l'espace ouvert du crochet de serrage (18) et, en une autre position laisse l'espace ouvert du crochet de serrage au moins principalement ouvert ;
caractérisé en ce que le bras vertical (10) du bras (6) en forme de L ou l'extension (16) du bras vertical est pourvu d'un moyen de restriction (26) qui (i) peut être placé en position de façon à limiter la rotation du crochet de serrage (18) autour de sa position la plus proche de l'extrémité inférieure du bras vertical, ne permettant que la partie initiale du mouvement de rotation, et (ii) peut être enlevé de façon à permettre la rotation du crochet de serrage (18) autour de ladite position la plus proche de l'extrémité inférieure du bras vertical.

2. Appareil selon la revendication 1, où le moyen de restriction (26) est une tige transversale horizontale.

3. Appareil selon la revendication 2, où la tige (26) peut être détachée du bras vertical (10) ou de l'extension (16) du bras vertical.

4. Appareil selon la revendication 3, où le bras vertical (10) ou l'extension (16) du bras vertical est pourvu d'un trou (22), dans lequel peut être insérée la tige (26).
